(19)

Europäisches Patentamt
European Patent Office
Office européen des brevets

(11) **EP 1 843 144 A1**

(12) **EUROPEAN PATENT APPLICATION**

(43) Date of publication:
**10.10.2007 Bulletin 2007/41**

(51) Int Cl.:
**G01N 21/31** (2006.01)

(21) Application number: **06425232.3**

(22) Date of filing: **04.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Consorzio Interuniversitario Nazionale Per La
Scienza E La Tecnologia Dei Materiali (INSTM)
I-50121 Firenze (IT)**

(72) Inventors:
• **Veronesi, Fabio**
  **06125 Santa Lucia (Perugia) (IT)**
• **Cardinali, Gianluigi**
  **06070 Pila (Perugia) (IT)**

• **Fatichenti, Fabrizio**
  **06070 Pila (Perugia) (IT)**
• **Rellini, Paolo**
  **06132 San Sistro (Perugia) (IT)**
• **Kenny, José Maria**
  **05100 Terni (IT)**
• **Petrucci, Roberto**
  **05031 Arrone (Terni) (IT)**
• **Manzo, Alberto**
  **00144 Roma (IT)**

(74) Representative: **Deambrogi, Edgardo et al
Jacobacci & Partners S.p.A.
Corso Emilia, 8
10152 Torino (IT)**

(54) **System and method for tagging a product, associated certification method and tagging product**

(57) What is described is a tagging system which comprises a material adapted to be associated with a product, such as a commercial product, an article, or the like. This material includes a base polymer matrix, adapted to provide a spectrum of response to one or more predetermined incident electromagnetic radiations, and at least one additive substance incorporated into a predetermined marking zone of the material. This additive substance is adapted to cause a modification of at least one characteristic of the response spectrum of the base matrix. The system also comprises a reference instructive item, for providing information correlated with at least one characteristic of the said modified spectrum. The information provided by the reference item is compared with corresponding information obtained from a spectral analysis of the material associated with the product in a method of certification of the product.

Also described are a tagging method based on the aforesaid system, a method of certification of a product tagged in this way, and tagging products such as a package, a label, an article, a textile, a varnish, paint or ink, and an adhesive product or sealant.

FIG.1

# FIG.2a

**Description**

The present invention relates to the tagging of a product such as a commercial product, an article or the like.

More specifically, the invention relates to a tagging system, a tagging method and a method for certification of a product.

There is a perceived requirement for instruments and procedures capable of ensuring the traceability of marketed products. To make a traceability system secure, it must be provided with reproducible analysis and monitoring systems such as a tagging system.

The tagging is subject to both national and international rules, which may be very precise, but which fail to limit the phenomenon of counterfeiting. Counterfeiting essentially occurs because any tagging and identification system with information carried in conventional language or in bar codes, including tags in electronic form, can be read and reproduced, with great accuracy in some cases. Consequently, the ease of fraudulent reproduction of the information is the limit to be overcome in order to obtain systems (tags or other systems) which effectively certify a product.

This general problem is aggravated by the intrinsic difficulties of traceability and certification of loose materials of any kind.

The object of the present invention is therefore to propose a tagging procedure which provides better protection against counterfeiting.

These and other objects are achieved according to the invention with a tagging system as defined in Claim 1, a tagging method as defined in Claim 24, and a method for certifying a product as defined in Claim 42. The invention also proposes a package, a label, an article, a textile, a varnish and an adhesive or sealing product as claimed.

The tagging procedure proposed by the invention is based on the use of a material which can be associated with a product, and which consists of a base polymer matrix to which is added an additive substance which uniquely characterizes the electromagnetic spectrum of the material.

Further characteristics and advantages of the invention will be made clear by the following detailed description, provided purely by way of example and without restrictive intent, with reference to the attached drawings, in which:

Figure 1 is an example of a product to which a tagging system according to the present invention is associated;
Figures 2a and 2b are sections, on an enlarged scale, through a detail of Figure 1;
Figure 3 is an example of a marking zone of a tagging product;
Figure 4 is a diagram of an extruder for manufacturing a tagging product.

The tagging procedure proposed by the present invention is based on the use of a polymer matrix material to which is added an additive substance which can carry encoded information by virtue of the association with a reference instructive item. These materials are referred to below as decodable informative plastics materials (DIPM).

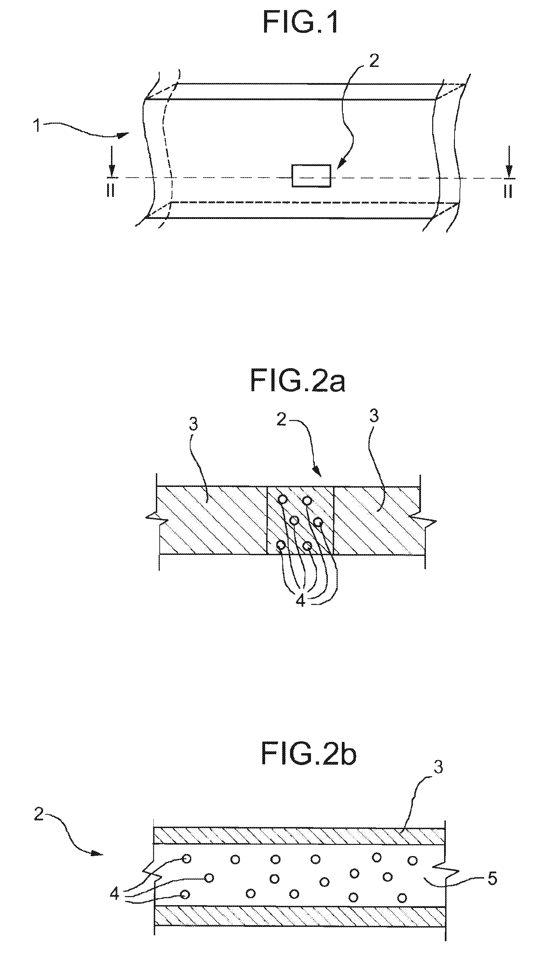

In Figure 1, the numeral 1 indicates a portion of a tagging product provided with a marking zone 2.

The tagging product can take the form of a label, package, part of a molded product, a textile, or a coat of varnish, paint, ink, adhesive or sealant.

Figures 2a and 2b show an enlarged section taken along the line II-II in Figure 1. In Figure 2a, the numeral 3 indicates a base polymer matrix and 4 indicates inclusions of an additive substance in the polymer matrix in a single-layer tagging material. In Figure 2b, on the other hand, the additive substance 4 is incorporated into a carrier layer 5 interposed between two thin films of polymer matrix 3.

Decodable informative plastics materials are materials which combine the specific chemical and physical characteristics typical of the field of application with the capability of encoding complex and suitably decodable data defined during the production of the plastic material itself.

Decodable informative plastics materials are produced by the addition to the base polymer matrices, at the time of their conversion, of one or more additive substances, such as one or more organic or inorganic chemical compounds, for example complex mixtures of natural origin, non-pathogenic and nontoxic microorganisms, cellular material, dyes or plant extracts. The additions are made in quantities which do not alter the functional mechanical characteristics of the plastics materials.

The polymer matrices have a specific spectrum of response to one or more predetermined incident electromagnetic radiations, while the additive substances can generate a controlled and reproducible change in at least one characteristic of the aforesaid response spectrum of the base matrix.

Clearly, according to their consistency, transparency, or other properties, DIPMs can be read by different chemical and physical systems adapted to provide a specific electromagnetic spectrum (such as an absorption, reflection or transmission spectrum) in response to one or more predetermined incident electromagnetic radiations, in a predetermined set of wavelengths (for example in the visible, UV or infrared spectra).

The spectra of the decodable informative plastics materials are decoded by means of suitable algorithms which, on the basis of one or more mathematical parameters to be stated at the time of production of the polymer material, interpret the response spectra of the material so as to produce a numerical sequence, or an alphanumeric code, or a bar code, which is specific to the material and which provides a very high excludability. Theoretically, the availability of spectra even with only a hundred points, reduced to a binary code (1/0), permits an excludability of $(1/2)^{100}$, in other words more than $1/10^{30}$. The same spectrum expressed in a decimal number base would produce an excludability of $(1/10)^{100}$.

It should be noted that each individual definition of the reading parameters of the same material carried out at the time of production enables a different code to be produced. This makes it possible to obtain a complex code, in other words an ordered set of two or more codes, from the same material, thus considerably increasing the excludability.

Furthermore, a basic aspect of these materials is the requisite versatility which permits the production of materials having different codings, without the need to set up on each occasion a new production of either the plastic matrix or the encoding substances, which would necessitate very large-scale production, and would thus discourage the use of these materials for products having a low production rate, even if the products are valuable.

DIPM can be used in different application types, as described below, since they can ensure an asymmetry of the reading and reproduction processes, in such a way that the first is permitted but the second is either impossible or highly improbable as a result of an excludability which can be predetermined according to the application and the requisite security level.

DIPM can be characterized by the following requirements for ensuring the security performance necessary for correct reading, combined with the impossibility of reproduction:

1. Including a specific combination of one or more plastics base materials and one or more additive substances (such as chemical substances, cells, dyes, plant extracts, complex mixtures of natural origin) suitably created for the specific product concerned. The body or organization producing the DIPM is responsible for its specific nature and the precise production run; also, this body or organization must maintain a suitable database of DIPMs for a period at least equal to the life of the product.

2. Containing on a record carrier (physical or electronic) the data required for decoding, which constitute a rule for the spectral analysis of the material, namely: the algorithm to be used, the measurement wavelength range, details of the spectrographic method to be used for the spectral analysis, the number base (according to the encoding/decoding algorithms described below), and the numerical sequence or the specific part thereof to be obtained by this encoding/decoding. Thus a certifier will receive information from a spectral analysis of the decodable informative plastics material, in the form of data relating to the intensity of one or more response electromagnetic radiations of the material, which will be decoded and compared with a reference instructive item, for example one accessible at a depository or associated with the product to be certified. A reference instructive item comprises a specimen of material, or a record carrier (for example a conventional label) carrying a reference information for the spectral analysis, comprising a sequence of measurement data correlated with at least one characteristic of the response spectrum, acquired at the source of the tagging. The reference spectral analysis information forms a marking identifying the product, and is encoded as an alphanumeric sequence or as a bar code.

3. Homogeneity of the inclusions of additive substance, so as not to cause significant variations in the decoding when different parts of the marking zone of the DIPM are read.

4. Provision of areas free of characters to enable reading.

Additionally, the decodable informative plastics material can be the carrier on which all the information of a conventional label is shown in clear text, according to the statutory specifications.

An example of a rule for decoding decodable informative plastics materials is described below. The information on DIPMs is obtained by readings which produce transmission, reflection or absorption response spectra.

Regardless of their nature, these spectra can be described in a general way as a graph in which each value of wavelength $\lambda_i$ corresponds to a single and closely specified value of intensity $y_i$ of the response radiation (transmitted, reflected or absorbed). The range of these spectra extends from a minimum value $\lambda_{min}$ to a maximum value $\lambda_{max}$ which is stated in the declarations attached to the decodable informative plastics material, and therefore the range E of the spectrum is:

$$E \;=\; \lambda_{max} - \lambda_{min} \quad (1)$$

Within the spectrum, it will also be possible to identify in a unique way a maximum value $y_{max}$ and a minimum

value $y_{min}$ of intensity.

The data to be published for the decoding of each specific DIPM will include, in addition to E, $\lambda_{max}$ and $\lambda_{min}$, the parameters l and b defined as below. The range E can be divided into N portions of amplitude l, not necessarily equal and contiguous. In the simplest case of a division into N equal and contiguous parts, the range can also be defined by the following equation:

$$E = Nl \quad (2)$$

If a different division of the range is used, other procedures will be defined from time to time. The intensity is discretized by using a value b indicating the number base by which the discrete states of the intensity values will be expressed. For example, if a binary system is used, then b = 2, but if the system is quaternary or n-ary, b will be equal to 4 or n.

In the simplified example of equal and contiguous classes, a range E is defined and is divided into N portions of width l, and the areas, of base l, subtended by the spectrum are calculated. Each of the i-th areas $a_i$ can be expressed as the ratio $R_i$ between the value of the i-th area and the maximum area $A_i$ of amplitude l and of height $y_{max}$, in other words by the following equation:

$$R_i = a_i/A_i \quad (3)$$

Since $A_i$ are $a_i$ are given, respectively, by the following relations:

$$a_i = \acute{y}l \quad (4)$$

and

$$A_i = y_{max}l \quad (5)$$

where $\acute{y}$ indicates the mean intensity of the portion l, and consequently

$$R_i = (\acute{y}l)/(y_{max}l) \quad (6)$$

and therefore

$$R_i = \acute{y}/y_{max}+k \quad (7)$$

where k is any small number such that 0<k<1 and is used to avoid incorrect classifications of the maximum value $y_{max}$.

It should be noted that the equation (7) is true both in the case in which the spectrum is considered to be continuous, and in the case in which it is considered as a series of discontinuous points. This is because equation (7) is based on the ratio of two areas, each of which is continuous; conversely, if the spectrum is considered as a series of discontinuous points, the mean intensity is simple the arithmetic mean of l intensities. The values of $R_i$ are expressed as decimals, with 0<$R_i$<1, and represent an l-th condensation of the original spectrum. It is also important to note that equation (7) is true even for the division of the range E into classes which are not equal and not contiguous.

Each $R_i$ is then transformed into discrete states ($D_i$) in number base b, according to the following equation:

$$D_i = [R_i b] \qquad (8)$$

Essentially, this algorithm transforms a spectrum to a string of N discrete values which are easier to use for comparison than the sequence of intensity values of the spectrum. Consequently, the probability $P_i$ that two different spectra will be randomly believed identical (the excludability) can be defined by the following equation:

$$P_i = (1/b)^N \qquad (9)$$

It can be deduced from this that the guarantee offered by the material increases with the values of b and N.

DIPMs can therefore be decoded, as described above, in different ways, depending on operational and security requirements.

There are some characteristics which are common to all the different forms of decrypting described below, the main forms being the following ones.

Firstly, articles made from DIPM include a reference area of the material which is free of the said additive substance and a marking zone of the material including the necessary additive substance, thus permitting a differential reading between the two areas (the base spectrum and the signature spectrum respectively) to determine the spectra generated by the materials added to the base, while eliminating by subtraction any superficial alterations (dust, alteration of the plastics) common to both bands. The absolute and relative dimensions of the two areas will be determined from time to time according to the requirements of the type of application.

There will also be information relating to the production batch, the manufacturer's name and the details of the reading and decoding of the decodable data-carrying plastics material.

Various specified forms of decoding are described below.

<u>Direct decoding materials</u>

These are materials for which the spectral data are not classified according to the algorithm described above, but are simply standardized according to the formula:

$$Y_c = (Y_e - Y_{max}) / (Y_{min} - Y_{max}) \qquad (10)$$

in which $Y_c$ is the correct intensity, $Y_e$ is the reading taken, $Y_{max}$ and $Y_{min}$ indicate the maximum and minimum intensities, respectively, found within the spectrum. Any other standardization algorithm producing values between a predetermined maximum and minimum can work equally well.

These materials are read only by direct comparison of the material to be checked with a standard specimen material deposited and kept at the premises of the manufacturing company. The absence of classification, the direct comparison in any spectral region and the absence of auxiliary information, as in the subsequent types, represent higher security factors for these materials. On the other hand, the requirement for the simultaneous reading of the standard material and the material to be checked makes the execution of the operation rather more difficult, since the analyses must be carried out on the production site where the standard materials are kept.

Consequently, these materials are usable for short-run products and/or highly valuable products. However, it should be emphasized that, in the presence of identification systems already in use in mass production (paper labels, bar codes, chips), the use of decodable data-carrying plastics materials represents an additional form of control and security to be used on limited samples or in disputes, leaving the system already in use to carry out the routine information task. In this context, direct decoding materials can also be applied to mass-produced articles whose unit value is not particularly high.

<u>Classified decoding materials (CDM)</u>

The encoding of these materials is based on the standardization and classification algorithm which has been described or on other algorithms capable of converting continuous data to discontinuous (classified) data within a predefined range (standardization), using an operator-defined number base.

These materials include, in addition to the information according to items 2, 3 and 4 described above, the following auxiliary information, necessary for reading and encoding: the spectral reading range ($\lambda_{min}$; $\lambda_{max}$), the reading system (reflectance, absorption, transmission), the resolution (expressed as wavelength, wavenumber or frequency), the number base for classification (b), the amplitude of the classes (1), any other data required for reading and decoding, if use is made of different algorithms which are still equivalent to those described previously.

These materials can belong to two sub-types: exposed classified decoding materials or encrypted classified decoding materials.

The former also include the numeric code which is to be derived by the reading and subsequent decrypting, and therefore the person making the check only has to determine whether the numerical sequence is equal (generally congruent and compatible in the case in which lower security levels are required) to that which has been decrypted.

The latter permit decrypting, but the comparison between the decrypted sequence and the sequence deposited with the manufacturer must be made by procedures determined from time to time according to requirements.

Multiple decoding materials

These are classified decoding materials in which decoding is carried out by using a single algorithm sequentially, with the modification of one or more parameters, thus obtaining a plurality of different numerical sequences from the same DIPM. For example, different sequences can be derived from the same reading by modifying the value of b, the reading range, or the reading system.

Multiple-phase decoding materials

These are classified decoding materials readable with different kinds of instrumentation (for example for reading spectra in the ultraviolet or in the infrared), for which all the typical information of classified decoding materials is provided, with the necessary variations for the different reading environments.

Combined decoding materials

These are materials with a combination of the above characteristics.

Multiple materials

These are materials of any one of the types described above, used by applying more than one DIPM to the same article. This certification system is particularly useful for avoiding the counterfeiting of highly valuable products (security labels for paintings, works of art), for situations in which security is a fundamental requirement for which the higher cost of multiple materials is justified.

Multiple-zone articles

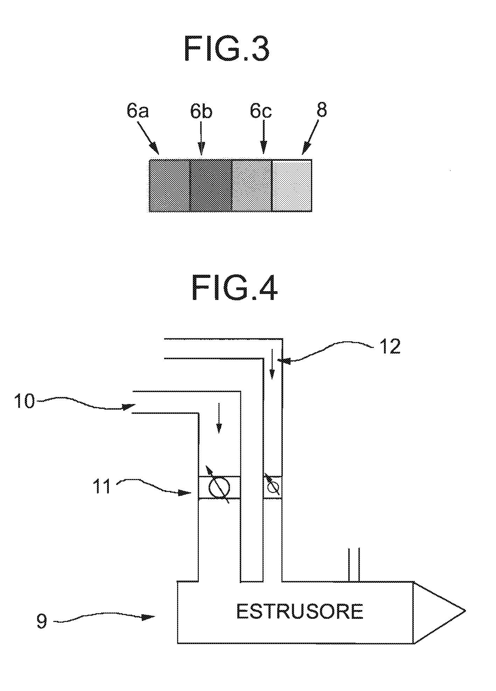

These are articles which include a plurality of materials of the types described above, prepared in such a way that distinct portions of different DIPMs are joined to the reference zone. Figure 3 shows an example of the case in which the article is a label with three zones (bands) 6a, 6b, 6c, consisting of different DIPMs, plus a reference band 8. Clearly, each zone must carry all the decrypting data described above. Obviously, they all consist of the same plastics base with different additions in each band.

A certification method for a product associated with an decodable informative plastics material proposed by the invention, comprises the operations of:

- spectral analysis of the material associated with the product and acquisition of information correlated with at least one characteristic of the modified spectrum;
- acquisition of information correlated with at least one characteristic of the modified spectrum on the basis of a reference instructive item created at the source of the tagging; and
- comparison between the acquired items of information, the product therefore being certified as authentic if these items of information are found to be congruent according to a predetermined matching criterion.

The comparison between the acquired items of information comprises the comparison between the measurement data acquired from a spectral analysis of the material associated with the product and corresponding measurement data acquired from a reference spectral analysis information item or from a specimen of material, created at the source of the tagging and associated with the product or accessible at a depository.

On the basis of what is described above, the production of a DIPM can be summarized as follows:

1) Selection of the polymer matrix for the physical base of the encodable additive.

This matrix can consist of one or more polymers, according to circumstances. The physical base can be formed from any polymer material which meets the following requirements: partial or total transparency at the wavelengths used for decoding, mechanical strength, and chemical resistance to atmospheric agents or to any specific application environments.

2) Selection of the encoding materials compatible with the polymer.

In addition to the specific characteristics discussed above, the specific requirements for DIPM production technologies discussed below must also be met.

3) Dispersion of the encoding material in the polymer.

Normally, the dispersion of the encoding additive substance takes place, because of factors related to the specific use as an identification system, in the stage immediately preceding the final processing of the polymer material.

4) Production of DIPM.

The specific production technologies essentially depend on the different fields of application. Types of technology for the incorporation of the encodable material into the polymer and the final processing can therefore be considered.

Incorporation into the polymer by hot mixing (thermoplastic polymers)

This is the most appropriate technology for the production of films used for the principal applications considered: namely labels and films for packaging. In this case, we would envisage the use of typical thermoplastic polymer matrices (PE, PP, PVC, PET, etc.), to which the encodable materials are added during the extrusion process normally used to mix the polymer materials with the additive substances (pigments, stabilizers, fluidizers) before their final processing. The films are produced in a subsequent stage by calendering or blowing. The same technology can also be applied to the use of DIPMs with a thermoplastic matrix in the production of synthetic fibres or in the production of products by injection moulding, compression or rotation moulding.

The base unit for producing drops of DIPM masterbatch comprising the additive substance in solution with the base polymer matrix to be used in the subsequent processing stages for the production of films, fibres or moulded articles is the extruder indicated by 9 in Figure 4. The extrusion process consists in forcing a polymer material 10, typically in the form of powder or granules, made fluid by heating, through an orifice 11. At the outlet, the polymer material is cooled and automatically cut into granules for the subsequent processing stages.

The encodable additive substances 12 can be added to the polymers by supplying pre-mixed material either to two different systems, as shown for example in Figure 4, each of which contains a single component, or to a single feed and proportioning system. The stage relating to this process is the most important one, since its efficiency determines the reliability and reproducibility of the data obtained from the spectra of the materials produced.

In addition to the thermoplastic polymers (and their copolymers and any mixtures) conventionally used in plastics technologies, it is also possible to use biodegradable thermoplastic polymers. These are still based principally on the industrial polymerization of monomers such as glycolic acid (PGA), lactic acid (PLA), butyric acid (PHB), valeric acid (PHV) and caprolactone (PCL).

In all the cases considered, the selection of the encodable material must take into consideration the necessary thermal stability at the melting points of the polymer matrices. The products of the degradation of the encodable material can possibly provide useful information for the encoding of the material. The typically hydrophobic nature of the polymer, by contrast with the polar nature of many encoding compounds, requires particular care in the homogenization of the materials.

The versatility of this technology is due to the ease with which limited batches of the decodable plastics material can be produced by making proportioned additions of the encoding additive substance during extrusion.

Incorporation into the polymer by cold mixing (thermosetting polymers)

In the case of thermosetting polymers, the polymerization processes take place simultaneously with the forming processes. This type of polymer includes epoxy adhesives, polyester resins for fibreglass and the phenolic resins used in some coatings and varnishes. In this case, the encoding additive substance can be added to the monomer before the combined polymerization and processing. The compound thus produced can be used as an adhesive, varnish, coating or matrix of composite materials. The selection of the encoding additive substance must take into consideration the polar nature of most of the monomers used and the polymerization temperatures which are reached as a result of the exothermic nature of the polymerization reaction. The typical instability of the formulations subject to premature polymerization, which limits their life, must also be considered.

Incorporation into a polymer in solution or suspension

Many varnishes, adhesives, sealants or polymer-based coating materials are produced incorporating the polymer in a fluid carrier in the form of a solution or suspension. The carrier can consist of a solvent which in many cases is simply water. After the application of the material, the solvent evaporates naturally. In these cases, the encoding additive substance can be added by using simple mechanical mixers, during the production of the suspension or solution or afterwards, before the final formulation is placed in the container. In this case, the selection of the encoding additive substance must take into consideration the compatibility with the solvent and with the polymer-solvent system.

Incorporation into a fluid or gel to be contained between two polymer films

To overcome the problems relating to the high temperatures required for producing films of encoding thermoplastic material, there is a possible alternative using operations carried out at ambient temperature. In these cases, it is possible to use a multi-layer film (see Figure 2b) formed in its outer part by a filmable thermoplastic polymer 3 (PE, PP, PVC, PET, biodegradable polymers, etc.) with the requisite mechanical and functional characteristics for the specific application. The inner layer of the film, called the carrier layer, is formed by a solution or suspension, for example an adhesive gel (for example agarose or polyacrylamide) with encodable additive substance, produced by a technology similar to that mentioned in the preceding section. After mixing, the gelatinous material can be deposited on the surface of the polymer film by spray systems, or gravitational or pressure-based metering dispensers, by means of which the flow rate can be controlled.

The adhesive capacity of the compound must be added to the criteria for selecting the encoding additive substance listed in the preceding section, in order to ensure the integrity and functionality of the multi-layer film.

Incorporation into a fluid carrier or adhesive gel to be joined to a polymer film

An alternative to the preceding case is the formulation, perfection, preparation and marketing of an adhesive polymer film for sale in tape form, which can easily be applied to any surface. This film will be transparent and strong, and will also consist of three layers. The first layer will be a flexible film of polyolefin or similar material, having a surface which has been subjected to a surface treatment to increase its capacity for adhesion to the gel containing the encodable additive substance, which will then form the second layer. This gel can have specific adhesive properties, or alternatively it is possible to use a very thin third adhesive layer (based for example on natural rubber latex or vinyl or acrylic adhesives in solvent solution or aqueous dispersion). The system must be such that the active part (i.e. the second layer) can be read.

Since a very large number of codes can be generated from a virtually unlimited number of types of decodable informative plastics materials (DIPM), it is possible to use these materials in all situations in which it is necessary to certify, trace or monitor the production or marketing life of a product, which can consist entirely or partially of the informative plastics material (IPM), or can be packaged in it. The DIPM can either perform the information functions required for identifying a product, or can be used as a guarantee of the genuineness of the labels or of other "clear text" information systems.

The various possible applications include:

• Labels

- *Product to be sold in single labeled pieces*

In this case, the DIPM-based label can be added as an auxiliary label wherever a conventional label is already provided (e.g. on bottled products, drugs, and software).

- *Product to be sold in single unlabeled pieces*

The DIPM-based label can be added on its own to products which do not require a conventional label (e.g. certification of fruit, mechanical spare parts, and electrical appliances). In these cases there will be delivery documents to which one of the DIPM-based labels used to label the products can be glued. This type of labeling requires the specification of the number of labeled pieces and matching to the production run. Counterfeiting is made impossible because, given a certain production run of DIPMs, it is not possible to increase their number.

- *Unlabeled loose products not for sale in single pieces*

For example, lots of seeds, small fruits sold only by weight, batches of semi-finished items or raw materials.

In these cases, the DIPM-based label serves to certify the delivery documents which specify the source, quality and quantity. If subsequent stages require the splitting and packaging of the lots, the body or organization producing the DIPM-based labels will make the production run compatible with the quantities specified by the delivery documents.

• Packages

Using DIPM for the direct production of decodable packages enables the material contained in the package to be precisely identified. In this case, the whole package (or part of it) forms the encoded tag. The different types of materials described above can be used: films produced by calendering or blowing, plastic containers produced by blowing or rotation moulding, textiles produced with plastic fibres.

• Moulded products

Many articles in daily use are products made from plastics material and many of them are subject to counterfeiting and require certificates of authenticity (e.g. toys, design objects, materials for biomedical use, motor vehicle components). In these cases, it is possible to use DIPMs directly in the formulation of the plastics moulded to produce the article or one of its components. The specified reading mechanisms (reflection spectrum) can overcome the lack of transparency.

• Textiles

The possibility of producing polymer fibres of DIPM will enable decodable textiles to be produced, with obvious applications in the textile industry, for monitoring the counterfeiting of textiles and valuable items of clothing and also for producing textile packages for loose products.

• Varnishes and surface coatings, paints, inks

The DIPMs used for producing varnishes, paints and other surface coating materials, as well as inks for forming graphic patterns on support surfaces, can have important applications not only for the identification of the compound itself (varnish, paint, ink) as a commercial product, but also for the identification of a product to which the compound is applied, for example valuable objects such as motor vehicles, boats, aircraft or works of art.

• Adhesive products and sealants

The availability of DIPMs for the production of decodable adhesives can have numerous applications: multi-layer glass for motor vehicles, concealed anti-counterfeiting tags in complex objects and systems, and identification of structural adhesives in advanced technology (aerospace, electronics, biomedicine) .

Clearly, provided that the principle of the invention is retained, the forms of embodiment and the details of production can be varied widely from what has been described and illustrated purely by way of example and without restrictive intent, without departure from the scope of protection of the present invention as defined by the appended claims.

**Claims**

1.    Tagging system **characterized in that** it comprises:

  - a material adapted to be associated with a product, such as a commercial product, an article or the like, including:

    a base polymer matrix, adapted to provide a spectrum of response to one or more predetermined incident electromagnetic radiations; and
    at least one additive substance incorporated into a predetermined marking zone of the material, adapted to modify at least one characteristic of the response spectrum of the base matrix, and

  - a reference instructive item, for providing information correlated with at least one characteristic of the said modified spectrum,
    the information provided by the reference item being intended to be compared with corresponding information obtained from a spectral analysis of the material associated with the product in a method of product certification.

**2.** System according to Claim 1, in which the said reference instructive item comprises a reference spectral analysis information correlated with at least one characteristic of the said modified spectrum, acquired at the source of the tagging, which forms an identifying mark of the said product.

**3.** System according to Claim 2, in which a reference spectral analysis information comprises a sequence of measurement data, acquired in a predetermined set of measurement wavelength values.

**4.** System according to Claim 3, in which the measurement data comprise data correlated with the intensity of one or more response electromagnetic radiations of the material.

**5.** System according to Claim 4, comprising a record carrier carrying data indicating a rule for spectral analysis of the material.

**6.** System according to Claim 5, in which the data indicating a rule for spectral analysis of the material include at least one of:

- the measurement wavelength range;
- indication of the spectrographic method to be used for the spectral analysis of the material;
- the measurement resolution;
- the number and range of any subdivisions of the measurement wavelength range in which the intensity of the response electromagnetic radiations of the material is detected.

**7.** System according to Claim 5 or 6, in which the said record carrier carrying the data indicating a rule for spectral analysis of the material is associated with the product.

**8.** System according to Claim 7, in which the said reference spectral analysis information is accessible at a depository.

**9.** System according to Claim 7, in which the said reference spectral analysis information is recorded on a carrier associated with the product.

**10.** System according to any one of Claims 2 to 9, in which the said reference spectral analysis information is encoded according to a predetermined encoding rule.

**11.** System according to Claim 10, in which the said reference spectral analysis information is encoded as a numerical sequence in a predetermined base of a numbering system.

**12.** System according to Claim 10, in which the said reference spectral analysis information is encoded as an alphanumeric sequence.

**13.** System according to Claim 10, in which the said reference spectral analysis information is encoded as a bar code.

**14.** System according to any one of Claims 2 to 10, in which the said reference spectral analysis information comprises a plurality of sequences of measurement data, acquired according to different rules for spectral analysis.

**15.** System according to Claim 1, in which the said reference instructive item comprises a specimen of material accessible at a depository.

**16.** System according to any one of the preceding claims, in which the said additive substance is selected from the group consisting of an organic or inorganic chemical compound, or a mixture of organic and/or inorganic compounds.

**17.** System according to any one of the preceding claims, in which the said additive substance is incorporated in a homogenous way into the marking zone of the material.

**18.** System according to any one of the preceding claims, in which the said response spectrum comprises a transmission spectrum of the material.

**19.** System according to any one of claims 1 to 17, in which the said response spectrum comprises a reflection spectrum of the material.

20. System according to any one of Claims 1 to 17, in which the said response spectrum comprises an absorption spectrum of the material.

21. System according to any one of the preceding claims, in which the said spectral analysis information is defined as the difference between a first signature spectrum, characteristic of the marking zone of the material, and a second background spectrum, characteristic of a reference area of the material without the said additive substance.

22. System according to any one of the preceding claims, in which the said material comprises inclusions of the said additive substance in the polymer matrix.

23. System according to any one of Claims 1 to 21, in which the said material is a multi-layer material comprising inclusions of the said additive substance in a carrier layer, applied to a base layer comprising the said polymer matrix.

24. Tagging method, **characterized in that** it comprises the operations of:

   - providing a material adapted to be associated with a product, such as a commercial product, an article or the like, including a base polymer matrix adapted to provide a spectrum in response to one or more predetermined incident electromagnetic radiations;
   - incorporation of at least one additive substance, adapted to modify at least one characteristic of the response spectrum of the base matrix, into a predetermined marking zone of the material;
   - creation of a reference instructive item for providing information correlated with at least one characteristic of the said modified spectrum; and
   - association of the material with a product for its tagging, the information provided by the reference item being intended to be compared with corresponding information obtained from a spectral analysis of the material associated with the product in a method of product certification.

25. Tagging method according to Claim 24, comprising the deposition of the said spectral analysis information at a depository.

26. Tagging method according to any one of Claims 24 to 26, comprising the recording of the said spectral analysis information on a carrier adapted to be associated with the product.

27. Tagging method according to any one of Claims 24 to 26, in which the creation of the said reference instructive item comprises:

   - the spectral analysis of the predetermined marking area of a specimen of material; and
   - the definition of a spectral analysis information comprising a sequence of measurement data correlated with at least one modified spectrum characteristic, acquired in a predetermined set of values of measurement wavelength.

28. Tagging method according to any one of Claims 24 to 27, in which the spectral analysis comprises the detection of the intensity of the electromagnetic radiations transmitted by the material in response to one or more predetermined incident electromagnetic radiations.

29. Tagging method according to any one of Claims 24 to 27, in which the spectral analysis comprises the detection of the intensity of the electromagnetic radiations reflected by the material in response to one or more predetermined incident electromagnetic radiations.

30. Tagging method according to any one of Claims 24 to 27, in which the spectral analysis comprises the detection of the intensity of the electromagnetic radiations absorbed by the material in response to one or more predetermined incident electromagnetic radiations.

31. Tagging method according to any one of Claims 28 to 30, comprising the definition of data indicating a rule for the spectral analysis of the material.

32. Tagging method according to Claim 31, in which the definition of data indicating a rule for spectral analysis of the material includes the definition of at least one of:

- the measurement wavelength range;
- indication of the spectrographic method to be used for the spectral analysis of the material;
- the measurement resolution;
- the number and range of any subdivisions of the measurement wavelength range in which the intensity of the response electromagnetic radiations of the material is detected.

33. Tagging method according to Claim 31 or 32, comprising the recording of the said data indicating a rule for spectral analysis of the material on a carrier adapted to be associated with the product.

34. Tagging method according to any one of Claims 27 to 33, in which the said spectral analysis comprises:

   - the spectral analysis of the marking zone of the material, producing a signature spectrum characteristic of the material including the said additive substances;
   - the spectral analysis of a reference area of the material comprising the said base matrix, but without additive substances, producing a characteristic background spectrum; and
   - the subtraction of the background spectral contribution from the signature spectrum.

35. Tagging method according to Claim 27, comprising the encoding of the said reference spectral analysis information according to a predetermined encoding rule.

36. Tagging method according to Claim 35, comprising the encoding of the said reference spectral analysis information as a numerical sequence in a predetermined base of a numbering system.

37. Tagging method according to Claim 35, comprising the encoding of the said reference spectral analysis information as an alphanumeric sequence.

38. Tagging method according to Claim 35, comprising the encoding of the said reference spectral analysis information as a bar code.

39. Tagging method according to Claim 24, in which the creation of the said reference instructive item comprises the production of a specimen of material.

40. Tagging method according to any one of Claims 24 to 39, in which the incorporation of the additive substance into a marking zone of the material takes place by dispersion into the base polymer matrix of drops of masterbatch comprising the said additive substance in solution with the said base matrix.

41. Tagging method according to any one of Claims 25 to 40, in which the incorporation of the additive substance into a marking zone of the material comprises the stages of:

   - inclusion of the said additive substance substance in a carrier, and
   - application of a carrier layer to a base layer comprising the said polymer matrix.

42. Method of certification of a product, such as a commercial product, an article, or the like, associated with a material including:

   a base polymer matrix, adapted to provide a spectrum of response to one or more predetermined incident electromagnetic radiations; and
   at least one additive substance incorporated into a predetermined marking zone of the material, adapted to modify at least one characteristic of the response spectrum of the base matrix,
   **characterized in that** it comprises the operations of:

   - spectral analysis of the material and acquisition of information correlated with at least one characteristic of the said modified spectrum;
   - acquisition of information correlated with at least one characteristic of the said modified spectrum on the basis of a reference instructive item created at the source of the tagging; and
   - comparison between the acquired items of information, whereby the product is certified as authentic if the said items of information are found to be congruent according to a predetermined matching criterion.

**43.** Method of certification according to Claim 42, in which the comparison between the acquired items of information comprises the comparison between the measurement data correlated with at least one characteristic of the said modified spectrum, acquired from a spectral analysis of the material associated with the product, carried out according to a predetermined rule of spectral analysis acquired from data indicating a rule associated with the product, and corresponding measurement data acquired from a reference spectral analysis information supplied by the said reference instructive item.

**44.** Method of certification according to Claim 42, in which the comparison between the acquired items of information comprises the comparison between the measurement data correlated with at least one characteristic of the said modified spectrum, acquired from a spectral analysis of the material associated with the product, carried out according to a predetermined rule for spectral analysis of the material, acquired from data indicating a rule associated with the product, and corresponding measurement data acquired from a specimen of material created at the source of the tagging and accessible at a depository.

**45.** Package intended for the packaging of a product, such as a commercial product, an article or the like, comprising:

a material including:

- a base polymer matrix, adapted to provide a spectrum of response to one or more predetermined incident electromagnetic radiations; and
- at least one additive substance incorporated into a predetermined marking zone of the material, adapted to modify at least one characteristic of the response spectrum of the base matrix,

the said package forming part of a tagging system for a product according to any one of Claims 1 to 23.

**46.** Label intended for the recognition of a product, such as a commercial product, an article or the like, comprising:

a material including:

- a base polymer matrix, adapted to provide a spectrum of response to one or more predetermined incident electromagnetic radiations; and
- at least one additive substance incorporated into a

predetermined marking zone of the material, adapted to modify at least one characteristic of the response spectrum of the base matrix,
the said label forming part of a tagging system for a product according to any one of Claims 1 to 23.

**47.** Article, having at least one component part formed by the moulding of plastics material, which comprises a material which includes:

- a base polymer matrix, adapted to provide a spectrum of response to one or more predetermined incident electromagnetic radiations; and
- at least one additive substance incorporated into a predetermined marking zone of the material, adapted to modify at least one characteristic of the response spectrum of the base matrix,
the said component forming part of a tagging system for the article according to any one of Claims 1 to 23.

**48.** Textile, particularly for an item of clothing, comprising:

a material including:

- a base polymer matrix, adapted to provide a spectrum of response to one or more predetermined incident electromagnetic radiations; and
- at least one additive substance incorporated into a

predetermined marking zone of the material, adapted to modify at least one characteristic of the response spectrum of the base matrix,
the said textile forming part of a tagging system for a product according to any one of Claims 1 to 23.

49. Varnish, paint, ink or similar compound, applicable in a thin layer as a coating or graphic pattern on a support surface of a product, such as a commercial product, an article or the like, comprising:

a material including:

- a base polymer matrix, adapted to provide a spectrum of response to one or more predetermined incident electromagnetic radiations; and
- at least one additive substance incorporated into a

predetermined marking zone of the material, adapted to modify at least one characteristic of the response spectrum of the base matrix,
the said compound forming part of a tagging system for a product according to any one of Claims 1 to 23.

50. Adhesive product or sealant comprising:

a material including:

- a base polymer matrix, adapted to provide a spectrum of response to one or more predetermined incident electromagnetic radiations; and
- at least one additive substance incorporated into a

predetermined marking zone of the material, adapted to modify at least one characteristic of the response spectrum of the base matrix,
the said product forming part of a tagging system for one or more objects according to any one of Claims 1 to 23.

# FIG.1

# FIG.2a

# FIG.2b

# FIG.3

6a 6b 6c 8

# FIG.4

12

10

11

9 ESTRUSORE

**European Patent Office**

## EUROPEAN SEARCH REPORT

Application Number

EP 06 42 5232

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 90/16043 A (LANSCO, INC) 27 December 1990 (1990-12-27) | 1-4,10, 18-26, 28-30, 35,42, 46-50 | INV. G01N21/31 |
| Y | * abstract *<br><br>* page 2, line 19 - line 24 *<br>* page 8, line 4 - line 12 *<br>* page 9, line 14 - line 23 *<br>* page 10, line 7 - line 26 *<br>* page 11, line 16 - page 12, line 5 *<br>* figures 1,4 *<br>----- | 11-13, 36-38 | |
| X | US 2005/109983 A1 (PAI-PARANJAPE VANDITA ET AL) 26 May 2005 (2005-05-26)<br><br><br>* abstract *<br>* paragraphs [0033], [0050], [0052], [0056], [0072], [0080], [0086] - [0090], [0092] *<br>----- | 1-4, 15-17, 22-24, 27, 39-42,45 | |
| X | WO 2006/024530 A (GIESECKE & DEVRIENT GMBH; BANQUE DE FRANCE; GIERING, THOMAS; SCHWENK,) 9 March 2006 (2006-03-09)<br><br>* page 3, paragraph 6 - page 4, paragraph 4 *<br>* page 37, paragraph 1 - page 38, paragraph 2 *<br>* page 41, paragraph 1 - paragraph 4 *<br>* page 47, paragraph 3 - page 52, paragraph 1 *<br>* page 54, paragraph 2 - page 55, paragraph 2 *<br>* page 68, last paragraph *<br>----- <br>-/-- | 1,5-9, 14,24, 31-34, 42-44 | TECHNICAL FIELDS SEARCHED (IPC)<br><br>G06K<br>G01N<br>G09F |

The present search report has been drawn up for all claims

| Place of search | Date of completion of the search | Examiner |
|---|---|---|
| The Hague | 25 August 2006 | D'Alessandro, D |

EPO FORM 1503 03.82 (P04C01)

European Patent Office

**EUROPEAN SEARCH REPORT**

Application Number

EP 06 42 5232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 297 508 B1 (BARMORE CHARLES R ET AL) 2 October 2001 (2001-10-02) * column 2, line 65 - column 3, line 35 * * column 12, line 50 - line 55 * * column 14, line 18 - line 37 * * column 15, line 28 - line 41 * * column 8, line 22 - line 58 * ----- | 1,24,42, 45 | |
| Y | EP 1 460 579 A (FUKUI, SHINYA) 22 September 2004 (2004-09-22) * abstract * * paragraph [0061] - paragraph [0068] * * paragraph [0080] - paragraph [0081] * * paragraph [0095] - paragraph [0096] * ----- | 11-13, 36-38 | |
| A | US 5 418 855 A (LIANG ET AL) 23 May 1995 (1995-05-23)  * abstract * * column 2, line 62 - column 3, line 29 * * column 5, line 24 - line 63 * * column 7, line 17 - line 22 * * column 9, line 39 - line 44 * ----- | 5-9,14, 31-33, 43,44 | TECHNICAL FIELDS SEARCHED (IPC) |
| A | WO 01/24107 A (DNA TECHNOLOGIES, INC) 5 April 2001 (2001-04-05) * page 4, line 24 - page 5, line 27 * * page 8, line 24 - page 10, line 9 * * page 12, line 24 - page 14, line 31 * ----- | 1-50 | |

The present search report has been drawn up for all claims

| Place of search | Date of completion of the search | Examiner |
|---|---|---|
| The Hague | 25 August 2006 | D'Alessandro, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 06 42 5232

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2006

| Patent document cited in search report | | Publication date | Patent family member(s) | | Publication date |
|---|---|---|---|---|---|
| WO 9016043 | A | 27-12-1990 | AU | 5952190 A | 08-01-1991 |
| US 2005109983 | A1 | 26-05-2005 | EP | 1690080 A1 | 16-08-2006 |
| | | | WO | 2005054830 A1 | 16-06-2005 |
| WO 2006024530 | A | 09-03-2006 | NONE | | |
| US 6297508 | B1 | 02-10-2001 | EP | 0990890 A1 | 05-04-2000 |
| EP 1460579 | A | 22-09-2004 | AU | 2002361129 A1 | 24-07-2003 |
| | | | CN | 1620670 A | 25-05-2005 |
| | | | WO | 03058549 A1 | 17-07-2003 |
| | | | US | 2005083720 A1 | 21-04-2005 |
| US 5418855 | A | 23-05-1995 | CA | 2172604 A1 | 06-04-1995 |
| | | | DE | 69429867 D1 | 21-03-2002 |
| | | | EP | 0721717 A1 | 17-07-1996 |
| | | | WO | 9509499 A1 | 06-04-1995 |
| WO 0124107 | A | 05-04-2001 | AU | 7843800 A | 30-04-2001 |

EPO FORM P0459

For more details about this annex : see Official Journal of the European Patent Office, No. 12/82